# EUROPEAN PATENT APPLICATION

(11) **EP 4 693 497 A1**
(43) Date of publication of application: **11.02.2026**
(21) Application number: 24810706.2
(22) Date of filing: 27.03.2024
(51) Int. Cl.: H01M 4/58, H01M 4/136, H01M 4/36

(54) **POSITIVE ELECTRODE ACTIVE MATERIAL PARTICLES, POSITIVE ELECTRODE ACTIVE MATERIAL MIXTURE, POSITIVE ELECTRODE FOR POWER STORAGE ELEMENT, POWER STORAGE ELEMENT, AND POWER STORAGE DEVICE**

(30) Priority: 19.05.2023 JP 2023083241
(71) Applicant: GS Yuasa International Ltd., Kisshoin, Minami-ku, Kyoto-shi, Kyoto 601-8520 (JP)
(72) Inventor: ENDO Daisuke, Kyoto-shi, Kyoto 601-8520 (JP)
(74) Representative: Isarpatent
(86) International application number: PCT/JP2024/012219
(87) International publication number: WO 2024/241698

(57) **Abstract**

Positive electrode active material particles according to one aspect of the present invention include: first active material particles and second active material particles, in which the first active material particles and the second active material particles each contain a lithium transition metal compound having a polyanion structure, and a destructive test force of the first active material particles is 5.0 mN or more, and a destructive test force of the second active material particles is 4.2 mN or less.

## Description

### TECHNICAL FIELD

The present invention relates to positive electrode active material particles, a positive electrode active material mixture, a positive electrode for an energy storage device, an energy storage device, and an energy storage apparatus.

### BACKGROUND ART

Nonaqueous electrolyte secondary batteries typified by lithium-ion nonaqueous electrolyte secondary batteries are widely used in electronic apparatuses such as personal computers or communication terminals, automobiles, or the like because of their high energy density. A nonaqueous electrolyte secondary battery generally includes an electrode body having a pair of electrodes electrically isolated by a separator, and a nonaqueous electrolyte interposed between the electrodes, and is configured to be charged and discharged by delivering charge transport ions between the electrodes. In addition, as energy storage devices other than the nonaqueous electrolyte secondary batteries, capacitors such as lithium ion capacitors or electric double layer capacitors, energy storage devices using an electrolyte other than a nonaqueous electrolyte, and the like have also been widely used.

As a positive electrode active material used in an energy storage device, a lithium transition metal compound having a polyanion structure, such as lithium iron phosphate, is known. Patent Literature 1 describes a nonaqueous electrolyte secondary battery including a positive electrode containing olivine lithium iron phosphate (lithium iron phosphate) as a positive electrode active material, and a negative electrode containing graphite as a negative electrode active material.

### CITATION LIST

### Patent Literature

Patent Literature 1: Japanese Unexamined Patent Application Publication No. 2021-153021

### DISCLOSURE OF INVENTION

### PROBLEMS TO BE SOLVED BY THE INVENTION

When positive electrode active material particles containing a lithium transition metal compound having a polyanion structure are used in a positive electrode of an energy storage device, the initial output of the energy storage device may be decreased due to low adhesion between a positive electrode base material and the positive electrode active material particles. Moreover, the packing density (electrode density) of the positive electrode active material particles in the positive electrode is also important from the viewpoint of increasing the output performance of the energy storage device.

The present invention has been made in view of the above circumstances, and an object of the present invention is to provide positive electrode active material particles capable of increasing initial output and an electrode density of an energy storage device and an energy storage apparatus.

### MEANS FOR SOLVING THE PROBLEMS

Positive electrode active material particles according to one aspect of the present invention include: first active material particles and second active material particles, in which the first active material particles and the second active material particles each contain a lithium transition metal compound having a polyanion structure, and a destructive test force of the first active material particles is 5.0 mN or more, and a destructive test force of the second active material particles is 4.2 mN or less.

### EFFECT OF THE INVENTION

Positive electrode active material particles according to one aspect of the present invention can increase initial output and an electrode density of an energy storage device and an energy storage apparatus.

### BRIEF DESCRIPTION OF DRAWINGS

FIG. 1 is an oblique perspective view illustrating an embodiment of an energy storage device having positive electrode active material particles according to the present invention.
FIG. 2 is a schematic view illustrating an embodiment of an energy storage apparatus configured by assembling a plurality of energy storage devices each having the positive electrode active material particles according to the present invention.

### DESCRIPTION OF EMBODIMENTS

First, outlines of positive electrode active material particles disclosed in the present description and other embodiments will be described.

[1] Positive electrode active material particles according to one aspect of the present invention include: first active material particles and second active material particles, in which the first active material particles and the second active material particles each contain a lithium transition metal compound having a polyanion structure, and a destructive test force of the first active material particles is 5.0 mN or more, and a destructive test force of the second active material particles is 4.2 mN or less.

The positive electrode active material particles according to [1] can increase initial output and an electrode density of an energy storage device. Although the exact reason is unknown, the following explanation is presumed.

In the case where conventional positive electrode active material particles contain a lithium transition metal compound having a polyanion structure, the positive electrode active material particles are easily deformed, damaged, or the like when being pressed onto a positive electrode base material in preparing a positive electrode. Therefore, it may be difficult to arrange the positive electrode active material particles so as to be embedded in a surface of the positive electrode base material, and it may be difficult to increase adhesion between the positive electrode base material and the positive electrode active material particles. In contrast, the positive electrode active material particles according to [1] include the first active material particles having a high hardness with a destructive test force of 5.0 mN or more. The first active material particles are less likely to be deformed, damaged, or the like even when being pressed onto the positive electrode base material, are easily arranged so as to be embedded in the surface of the positive electrode base material, and easily increase the adhesion between the positive electrode base material and the first active material particles. When the adhesion between the first active material particles and the positive electrode base material is high, the interface resistance between the first active material particles and the positive electrode base material can be reduced. Therefore, the initial output of the energy storage device can be increased. It is considered that the hardness evaluation of particles by a destructive test force can appropriately evaluate a hardness of particles without depending on a size of the particles to be measured, compared to a case where a change in particle size of particles or the like when the particles are compressed is used as an index.

On the other hand, when the hardness of the positive electrode active material particles is high, the positive electrode active material particles are less likely to be deformed or the like even when being pressed onto the positive electrode base material, and thus voids are likely to be generated between the positive electrode active material particles. Therefore, it may be difficult to increase the packing density of the positive electrode active material particles in the positive electrode, that is, to increase the electrode density. In contrast, the positive electrode active material particles according to [1] include the second active material particles having a relatively low hardness with a destructive test force of 4.2 mN or less together with the first active material particles, and thus the second active material particles can be deformed to fill the voids between the first active material particles having a high hardness. Therefore, the electrode density of the energy storage device can be increased.

In the present invention, the term "having a polyanion structure" means having an oxoacid anion (PO₄³⁻, SiO₄⁴⁻, BO₃³⁻, or the like).

In the present invention, the term "destructive test force" means a test force at which cracking occurs in active material particles when the first active material particles or the second active material particles (hereinafter, the first active material particles and the second active material particles are also collectively referred to as the "active material particles") are compressed. The destructive test force of the active material particles is measured by a micro compression test using a micro compression tester ("MCT-511" manufactured by Shimadzu Corporation). As a probe, a diamond flat indenter having a diameter of 50 µm is used. The test force is set to from 1 mN to 30 mN, the probe speed is set to 0.134 mN/sec, and the pressure is applied to one of the active material particles while changing the test force at a constant speed. It is determined that the active material particle is cracked at an inflection point of the obtained test force-displacement graph, and the test force at this inflection point is defined as the destructive test force. The destructive test force is measured for five active material particles for each of the first active material particles and the second active material particles, and the average value thereof is adopted. The active material particles to be measured are selected from particles having a particle size of 1/2 times or more and 2 times or less the average particle size of the active material particles. The "particle size" of each particle is an average value of the minor axis and the major axis. The minor axis is the shortest diameter passing through the center of the minimum circumscribed circle of the particle, and the major axis is a diameter passing through the above center and orthogonal to the minor axis. When there are two or more shortest diameters, the one whose orthogonal diameter is the longest is defined as the minor axis. The "average particle size" means a value at which a volume-based cumulative distribution calculated in accordance with JIS Z 8819-2:2001 is 50% on the basis of a particle size distribution measured by a laser diffraction/scattering method applied to a diluted liquid obtained by diluting particles with a solvent in accordance with JIS Z 8825:2013.

When the destructive test force is measured using the positive electrode active material particles in a state where the first active material particles and the second active material particles are mixed, first, the particle size distribution of the entire positive electrode active material particles is measured by the above-described method, and then the destructive test force of each of the first active material particles and the second active material particles is obtained by the following procedure.

When the frequency distribution of the particle size shows unimodality, the average particle sizes of the first active material particles and the second active material particles are assumed to be equal to each other, and the destructive test force of each of the particles is measured. That is, particles to be measured are selected from particles having a particle size of 1/2 times or more and 2 times or less the above average particle size. The active material particles having a destructive test force of 4.6 mN or more are classified as the first active material particles, and the active material particles having a destructive test force of less than 4.6 mN are classified as the second active material particles. Then, for each of the first active material particles and the second active material particles, the average value of the destructive test forces measured for five active material particles is calculated.

When the frequency distribution of the particle size shows bimodality, the average particle size of the first active material particles and the average particle size of the second active material particles are assumed to be different from each other, and the destructive test force of each of the active material particles is measured. That is, on the basis of an average particle size A (corresponding to one of the two maxima of the frequency distribution of the particle size), five particles to be measured are selected from particles having a particle size of 1/2 times or more and 2 times or less the average particle size A, and the average value of the measured destructive test forces is calculated. Moreover, on the basis of an average particle size B (corresponding to an other of the two maxima of the frequency distribution of the particle size), five particles to be measured are selected from particles having a particle size of 1/2 times or more and 2 times or less the average particle size B, and the average value of the measured destructive test forces is calculated. When the frequency distributions of the particle sizes of the active material particles having the average particle size A and the active material particles having the average particle size B partially overlap, that is, when B × 2 > A × 1/2 or when A × 2 > B × 1/2, the active material particles are classified into active material particles having a particle size close to the average particle size A and active material particles having a particle size close to the average particle size B with (A + B)/2 as a boundary. When the average value of the destructive test force of the active material particles having the average particle size A is 4.6 mN or more, the active material particles having the average particle size A are defined as the first active material particles, and the active material particles having the average particle size B are defined as the second active material particles. When the average value of the destructive test force of the active material particles having the average particle size A is less than 4.6 mN, the active material particles having the average particle size B are defined as the first active material particles, and the active material particles having the average particle size A are defined as the second active material particles. Also in the case of multimodality in which three or more maxima are present in the frequency distribution of the particle size, as in the case of the above-described bimodality, the active material particles having three or more different average particle sizes are assumed to be mixed, five active material particles are selected for each of the different average particle sizes, and the average value of the destructive test forces is calculated. The active material particles having the average value of the destructive test force of 4.6 mN or more are defined as the first active material particles, and the active material particles having the average value of the destructive test force of less than 4.6 mN are defined as the second active material particles.

When the positive electrode active material particles are incorporated as a positive electrode active material into the energy storage device, the destructive test force is measured for the energy storage device in a completely discharged state by the following method. First, the energy storage device is put into a fully charged state by performing constant current charge at a charge current of 0.05 C until the voltage reaches a charge cutoff voltage at the time of normal use. After a 30 minute rest, constant current discharge is performed at a discharge current of 0.05 C to a discharge cutoff voltage (lower limit voltage) at the time of normal use. The energy storage device is disassembled to take out the positive electrode, and a test battery including a metal lithium electrode as the counter electrode is assembled and subjected to constant current discharge at a current value of 10 mA per 1 g of a positive electrode mixture until the positive electrode potential reaches 2.0 V vs. Li/Li⁺ to adjust the positive electrode to a completely discharged state. The test battery is disassembled again to take out the positive electrode. An electrolyte and the like adhering to the positive electrode taken out are sufficiently washed with dimethyl carbonate, and the positive electrode active material particles are collected after the positive electrode is dried at room temperature for a whole day and night. The collected positive electrode active material particles are subjected to measurement. Operations from the disassembly of the energy storage device to the collection of the positive electrode active material particles are performed in an argon atmosphere having a dew point of -60°C or less. The term "at the time of normal use" refers to a case where the energy storage device is used by adopting charge conditions and discharge conditions recommended or specified for the energy storage device. For example, when a charger for the energy storage device is prepared, the charge conditions refer to a case where the energy storage device is used by applying the charger.

[2] In the positive electrode active material particles according to [1], an average particle size of the first active material particles may be larger than an average particle size of the second active material particles.

In the positive electrode active material particles according to [2], since the average particle size of the first active material particles is larger than the average particle size of the second active material particles, the first active material particles having a high hardness are easily pressed onto the positive electrode base material in a state of being in direct contact with the positive electrode base material. Therefore, the adhesion between the positive electrode base material and the first active material particles can be further increased, which leads to a reduction in the interface resistance between the first active material particles and the positive electrode base material and an improvement in the initial output of the energy storage device.

[3] In the positive electrode active material particles according to [1] or [2], the average particle size of the first active material particles is different from the average particle size of the second active material particles, and a ratio d2/d1 of a value d2 of a larger one of the average particle size of the first active material particles and the average particle size of the second active material particles to a value d1 of a smaller one of the average particle size of the first active material particles and the average particle size of the second active material particles may be 3.0 or more.

In the positive electrode active material particles according to [3], since the ratio of the average particle size d2 of the active material particles having a large average particle size to the average particle size d1 of the active material particles having a small average particle size is the above lower limit or more, gaps between the active material particles having a large average particle size can be easily filled with the active material particles having a small average particle size, and thus the electrode density can be further increased.

[4] In the positive electrode active material particles according to any one of [1] to [3], the average particle size of the first active material particles is different from the average particle size of the second active material particles, and a ratio m2/m1 of a content m2 of one of the first active material particles and the second active material particles having a larger average particle size to a content m1 of an other of the first active material particles and the second active material particles having a smaller average particle size may be, on a mass basis, 1.0 or more and 2.4 or less.

In the positive electrode active material particles according to [4], since the ratio m2/m1 of the content m2 of the active material particles having a large average particle size to the content m1 of the active material particles having a small average particle size is within the above range, gaps between the active material particles having a large average particle size can be easily filled with the active material particles having a small average particle size, and thus the electrode density can be further increased.

[5] A positive electrode active material mixture according to an other aspect of the present invention contains the positive electrode active material particles according to any one of [1] to [4].

Since the positive electrode active material mixture according to [5] contains the positive electrode active material particles according to any one of [1] to [4], the initial output and the electrode density of the energy storage device can be increased.

[6] A positive electrode for an energy storage device according to an other aspect of the present invention includes a positive electrode base material and the positive electrode active material mixture according to [5] stacked on the positive electrode base material. The positive electrode active material mixture according to [5] may be stacked on the positive electrode base material directly, or may be stacked on the positive electrode base material via an intermediate layer containing a conductive agent or the like.

Since the positive electrode for an energy storage device according to [6] includes the positive electrode active material mixture according to [5] containing the positive electrode active material particles, the initial output and the electrode density of the energy storage device can be increased.

[7] An energy storage device according to an other aspect of the present invention includes the positive electrode for an energy storage device according to [6].

Since the energy storage device according to [7] includes the positive electrode for an energy storage device according to [6] containing the positive electrode active material particles, the initial output and the electrode density are large.

[8] An energy storage apparatus according to a still other aspect of the present invention includes two or more energy storage devices and one or more of the energy storage devices according to [7].

Since the energy storage apparatus according to [8] includes one or more of the energy storage devices according to [7], the initial output and the electrode density are large.

Hereinafter, positive electrode active material particles, a positive electrode active material mixture, a positive electrode for an energy storage device, a method for manufacturing a positive electrode, an energy storage device, an energy storage apparatus, a method for manufacturing an energy storage device according to an embodiment of the present invention, and other embodiments will be described in detail. The names of the constituent members (constituting elements) used in the embodiments may be different from the names of the constituent members (constituting elements) used in the background art.

### [Positive electrode active material particles]

Positive electrode active material particles according to the embodiment of the present invention have first active material particles and second active material particles. A destructive test force of the first active material particles is 5.0 mN or more, and a destructive test force of the second active material particles is 4.2 mN or less.

### <Configuration of first active material particles>

The first active material particles contain a lithium transition metal compound having a polyanion structure. The lithium transition metal compound having a polyanion structure is usually used in the form of particles coated with a carbon material from the viewpoint of electron conductivity and the like. That is, in the embodiment of the present invention, the first active material particles may be particles obtained by coating particles containing a lithium transition metal compound having a polyanion structure with a carbon material.

Examples of the lithium transition metal compound having a polyanion structure include a compound containing an oxoacid anion (PO₄³⁻, SO₄²⁻, SiO₄⁴⁻, BO₃³⁻, VO₄³⁻, or the like), a lithium ion, and a transition metal ion. The oxoacid anion may be a condensed anion (P₂O₇⁴⁻, P₃O₁₀⁵⁻, or the like). The lithium transition metal compound having a polyanion structure may have an olivine crystal structure. The lithium transition metal compound having a polyanion structure is typically a polyanion compound containing a lithium element and a transition metal element, and may further contain another element (for example, a halogen element or the like). The transition metal element contained in the lithium transition metal compound having a polyanion structure is preferably an iron element, a manganese element, a nickel element, or a cobalt element, more preferably an iron element or a nickel element, and still more preferably an iron element. The oxoacid anion contained in the lithium transition metal compound having a polyanion structure is preferably a phosphate anion (PO₄³⁻).

The lithium transition metal compound having a polyanion structure is preferably a compound represented by the following formula (1).

LiₐM_{b}(AO_{c})_{d}Xₑ ... (1)

In the formula (1), M is at least one transition metal element. A is at least one selected from B, Al, Si, P, S, Cl, Ti, V, Cr, Mo, or W. X is at least one halogen element, a, b, c, d, and e are numbers satisfying 0 < a ≤ 3, 0 < b ≤ 2, 2 ≤ c ≤ 4, 1 ≤ d ≤ 3, and 0 ≤ e ≤ 1, and each of a, b, c, d, and e may be an integer or a decimal.

In the formula (1), M is preferably any one of Fe, Mn, Ni and Co, or a combination of any two of them. M is further preferably Fe, Mn or a combination thereof, and more preferably Fe. Moreover, the content rate of Fe in M is preferably 50 mol% or more, and more preferably 70 mol% or more, 90 mol% or more, or 99 mol% or more. A is preferably P. X is preferably F. As the embodiment, a = 1, b = 1, c = 4, d = 1, and e = 0 may be preferable.

Specific examples of the lithium transition metal compound having a polyanion structure include LiFePO₄, LiCoPO₄, LiFe_{0.5}Co_{0.5}PO₄, LiMnPO₄, LiNiPO₄, LiMn_{0.5}Fe_{0.5}PO₄, LiCrPO₄, LiFeVO₄, Li₂FeSiO₄, Li₂Fe₂(SO₄)₃, LiFeBO₃, LiFePO_{3.9}F_{0.2}, Li₃V₂(PO₄)₃, Li₂MnSiO₄, and Li₂CoPO₄F. Atoms or polyanions in the lithium transition metal compounds having a polyanion structure may be partially substituted with other atoms or anion species. One of the lithium transition metal compounds having a polyanion structure may be used alone, or two or more of the lithium transition metal compounds having a polyanion structure may be mixed and used.

The content of the lithium transition metal compound having a polyanion structure in particles containing the lithium transition metal compound having a polyanion structure may be 60% by mass or more, 80% by mass or more, 90% by mass or more, 95% by mass or more, or 99% by mass or more.

The particles containing the lithium transition metal compound having a polyanion structure may be particles in which a plurality of primary particles are each independently present without aggregation (single particles), but are preferably secondary particles formed by aggregation of a plurality of primary particles. The particles are, for example, secondary particles of the lithium transition metal compound having a polyanion structure.

In the embodiment of the present invention, the particles containing the lithium transition metal compound having a polyanion structure are coated with a carbon material to form the first active material particles. A part of the carbon material may be present inside the particles containing the lithium transition metal compound having a polyanion structure. In the first active material particles, there may be a portion not coated with the carbon material (for example, a portion where the lithium transition metal compound having a polyanion structure is exposed).

Since the particles containing the lithium transition metal compound having a polyanion structure are coated with the carbon material, the active material particles can exhibit sufficient electron conductivity between the particles. The carbon material is, for example, an inorganic material having a carbon element content of 80% by mass or more and 100% by mass or less. The carbon element content in the carbon material may be 90% by mass or more, or 95% by mass or more. Examples of an element other than the carbon element, which may be contained in the carbon material, include an oxygen element, a hydrogen element, and a nitrogen element. Examples of the carbon material include graphite and non-graphitic carbon.

The content of the carbon material in the first active material particles is preferably 0.1% by mass or more and 20% by mass or less, more preferably 0.2% by mass or more and 10% by mass or less, still more preferably 0.3% by mass or more and 5% by mass or less, and still further preferably 0.5% by mass or more and 2% by mass or less. When the content of the carbon material in the first active material particles is the above lower limit or more, the electron conductivity can be increased. When the content of the carbon material in the first active material particles is the above upper limit or less, the content of the lithium transition metal compound having a polyanion structure can be increased, and the discharge capacity per volume of the energy storage device can be increased.

The total content of the lithium transition metal compound having a polyanion structure and the carbon material in the first active material particles is preferably 90% by mass or more and 100% by mass or less, and may be 95% by mass or more, 98% by mass or more, 99% by mass or more, or 99.9% by mass or more.

The lower limit of the destructive test force of the first active material particles is 5.0 mN as described above, preferably 6.0 mN, more preferably 8.0 mN, and still more preferably 8.5 mN. When the destructive test force is the above lower limit or more, when the first active material particles are pressed onto a positive electrode base material, the adhesion to the positive electrode base material can be increased. Moreover, as a result, the initial output of the energy storage device can be increased. On the other hand, the upper limit of the destructive test force of the first active material particles is preferably 30 mN, more preferably 25 mN, and still more preferably 20 mN from the viewpoint of manufacturability. The destructive test force of the first active material particles may be equal to or more than any of the lower limits described above and equal to or less than any of the upper limits described above. When an intermediate layer containing a conductive agent or the like is formed on the positive electrode base material of the energy storage device, the first active material particles can be pressed onto the positive electrode base material via the intermediate layer. Also in this case, when the first active material particles are pressed onto the positive electrode base material via the intermediate layer, the adhesion to the intermediate layer or the positive electrode base material can be increased.

The average particle size of the first active material particles is preferably 0.5 µm or more and 30 µm or less, more preferably 1 µm or more and 25 µm or less, and still more preferably 1 µm or more and 20 µm or less. When the average particle size of the first active material particles is within the above range, the contact area with the positive electrode base material or the above-described intermediate layer can be increased, and thus the initial output of the energy storage device can be further increased. Moreover, when the average particle size of the first active material particles is within the above range, the electrode density and the initial output density of the energy storage device can be increased. In order to obtain the first active material particles having a predetermined average particle size, a pulverizer, a classifier, or the like is used. Examples of the pulverization method include a method using a mortar, a ball mill, a sand mill, a vibrating ball mill, a planetary ball mill, a jet mill, an opposed jet mill, a spiral jet mill, a sieve, or the like. At the time of pulverization, wet pulverization in the presence of water or an organic solvent such as hexane can also be used. As a classification method, a sieve, an air classifier, or the like is used as necessary in both a dry method and a wet method.

The first active material particles preferably have a spherical shape from the viewpoint of increasing the contact area with the positive electrode base material or the above-described intermediate layer. Moreover, the average aspect ratio of the first active material particles is preferably 1.0 or more and 1.5 or less, more preferably 1.0 or more and 1.4 or less, and still more preferably 1.0 or more and 1.2 or less from the same viewpoint. The "average aspect ratio" is obtained as an arithmetic average value obtained by averaging T/Y values, which are ratios between a major axis T that is the longest of the first active material particles and a minor axis Y that is the longest in a direction perpendicular to the major axis T, for 10 first active material particles in a cross-sectional SEM image of a positive electrode including the first active material particles. In order to obtain the cross-sectional SEM image of the positive electrode, JSM-7001F (manufactured by JEOL Ltd.) is used as a scanning electron microscope. As the cross-sectional SEM image, a secondary electron image is observed. An acceleration voltage is 5 kV. The observation magnification is set to a magnification at which the number of the first active material particles appearing in one visual field is 3 or more and 15 or less. The obtained cross-sectional SEM image is stored as an image file. In addition, various conditions such as a spot diameter, a working distance, an illumination current, luminance, and a focus are appropriately set such that outlines of the first active material particles become clear.

### <Configuration of second active material particles>

The second active material particles contain a lithium transition metal compound having a polyanion structure. In the embodiment of the present invention, similarly to the first active material particles, the second active material particles are particles obtained by coating particles containing a lithium transition metal compound having a polyanion structure with a carbon material.

The lithium transition metal compound having a polyanion structure, the carbon material, and the contents thereof in the second active material particles can be the same as those described above in the first active material particles. Moreover, the average particle size and the average aspect ratio of the second active material particles can be the same as those in the first active material particles.

The upper limit of the destructive test force of the second active material particles is 4.2 mN as described above, preferably 4.0 mN, more preferably 3.5 mN, and still more preferably 3.2 mN. When the destructive test force is the above upper limit or less, the second active material particles can be deformed to fill voids between the first active material particles. Therefore, the electrode density of the energy storage device can be increased. On the other hand, the lower limit of the destructive test force of the second active material particles is not particularly limited, and may be, for example, 0.5 mN. The destructive test force of the second active material particles may be equal to or more than any of the lower limits described above and equal to or less than any of the upper limits described above.

### <Method for manufacturing first active material particles and second active material particles>

In the embodiment of the present invention, in a method using a hydroxide precursor, a lithium source, and a carbon source, the first active material particles and the second active material particles can be efficiently obtained by adjusting a pH of a reaction liquid using ammonia water or the like when the hydroxide precursor is manufactured. By such a method for manufacturing, the first active material particles and the second active material particles which have a spherical shape and whose hardness is easily adjusted are obtained. Hereinafter, the method for manufacturing will be described in detail. However, the first active material particles and the second active material particles according to the present invention are not limited to those manufactured by the following method for manufacturing.

First, a hydroxide precursor is obtained by a precipitation reaction between a transition metal ion and a hydroxide ion in water. Specifically, for example, a transition metal salt aqueous solution and a sodium hydroxide aqueous solution or the like are added dropwise to water to obtain a hydroxide precursor (a transition metal hydroxide). The transition metal salt may be a water-soluble salt containing a transition metal element constituting the target lithium transition metal compound, and for example, iron sulfate, iron chloride, cobalt sulfate, manganese sulfate, nickel sulfate, or the like can be used. In addition, a potassium hydroxide aqueous solution or the like may be used instead of the sodium hydroxide aqueous solution. When the transition metal salt aqueous solution and the sodium hydroxide aqueous solution or the like are added dropwise to water, in order to maintain a pH of the water (reaction liquid) to which these aqueous solutions are added dropwise in a predetermined range, an ammonia aqueous solution or the like is further added dropwise to the reaction liquid. The concentration of the ammonia aqueous solution to be added dropwise can be, for example, about 0.3 mol/dm³ or more and 1 mol/dm³ or less. The pH of the reaction liquid can be adjusted by adjusting the concentrations, the amounts dropped, and the like of the ammonia aqueous solution or the like and the sodium hydroxide aqueous solution or the like to be added dropwise. Another alkaline aqueous solution such as a hydrazine aqueous solution may be further added dropwise together with the ammonia aqueous solution or the like. The pH of the reaction liquid can also be adjusted by the amount dropped or the like of the another alkaline aqueous solution. When the first active material particles are manufactured, the pH of the reaction liquid is preferably in the range of 8.5 to 10.6. On the other hand, when the second active material particles are manufactured, the pH of the reaction liquid is preferably in the range of 8.5 to 10.6. When the pH of the reaction liquid is out of the above range, or when the ammonia aqueous solution or the like is not added dropwise to the reaction liquid even when the pH of the reaction liquid is within the above range, the amount of change in the particle size of the finally obtained active material particles during pressurization tends to be large, that is, the destructive test force of the active material particles tends to be small.

Next, the obtained hydroxide precursor, a lithium source, and a carbon source are mixed and fired under an inert atmosphere (for example, under a nitrogen atmosphere) to obtain the first active material particles and the second active material particles according to the embodiment of the present invention. As the lithium source, a compound having a polyanion structure and containing a lithium element, such as LiH₂PO₄, Li₃PO₄, or LiHSO₄ can be suitably used. In addition, as the lithium source, LiOH, a lithium halide, or the like can be used. When the lithium source to be used is not a compound having a polyanion structure, a compound having a polyanion structure is further mixed, and firing is performed. As the compound having a polyanion structure, a salt of an ammonium cation and a polyanion, such as NH₄H₂PO₄, (NH₄)₃PO₄, (NH₄)₂HPO₄, (NH₄)₂SO₄, or NH₄VO₃, or the like can be suitably used. As the carbon source, an organic substance such as sucrose, lactose, maltose, sucrose, polyvinyl alcohol, or ascorbic acid can be used. The firing temperature can be, for example, 500°C or more and 800°C or less.

### <Contents and others of first active material particles and second active material particles>

In the positive electrode active material particles, the average particle size of the first active material particles is preferably different from the average particle size of the second active material particles. Moreover, the lower limit of a ratio d2/d1 of a value d2 of a larger one of the average particle size of the first active material particles and the average particle size of the second active material particles to a value d1 of a smaller one of the average particle size of the first active material particles and the average particle size of the second active material particles is preferably 3.0, more preferably 4.0, and still more preferably 5.0. When the ratio d2/d1 is the above lower limit or more, gaps between the active material particles having a large average particle size can be easily filled with the active material particles having a small average particle size, and thus the electrode density can be further increased. The upper limit of the ratio d2/d1 is not particularly limited, and may be, for example, 15.0. The ratio d2/d1 may be equal to or more than any of the lower limits described above and equal to or less than any of the upper limits described above.

When the average particle size of the first active material particles is different from the average particle size of the second active material particles, a ratio m2/m1 of a content m2 of one of the first active material particles and the second active material particles having a larger average particle size to a content m1 of an other of the first active material particles and the second active material particles having a smaller average particle size is, on a mass basis, preferably 0.5 or more and 3.0 or less, more preferably 0.8 or more and 2.7 or less, and still more preferably 1.0 or more and 2.4 or less. When the ratio m2/m1 is within the above range, the gaps between the active material particles having a large average particle size can be appropriately filled with the active material particles having a small average particle size, and thus the electrode density can be further increased. The ratio m2/m1 is obtained by measuring masses of the active material particles whose average particle sizes are to be measured.

The average particle size of the first active material particles is preferably larger than the average particle size of the second active material particles. When the average particle size of the first active material particles is larger than the average particle size of the second active material particles as described above, the first active material particles having a high hardness are easily pressed onto the positive electrode base material in a state of being in direct contact with the positive electrode base material. Therefore, the adhesion between the positive electrode base material or the above-described intermediate layer and the first active material particles can be further increased, which leads to a reduction in the interface resistance between the first active material particles and the positive electrode base material and an improvement in the initial output of the energy storage device.

### [Positive electrode active material mixture]

A positive electrode active material mixture according to the embodiment of the present invention contains the positive electrode active material particles. The positive electrode active material mixture can contain, as necessary, optional constituents such as another positive electrode active material other than the positive electrode active material particles, a conductive agent, a binder (binding agent), a thickener, and a filler.

As the another positive electrode active material other than the positive electrode active material particles, various conventionally known positive electrode active materials can be used. However, the content of the positive electrode active material particles to all positive electrode active materials (the total of the positive electrode active material particles and the another positive electrode active material) contained in a positive electrode active material layer is preferably 90% by mass or more, more preferably 99% by mass or more, and still more preferably 100% by mass. When the positive electrode active material is substantially composed of only the positive electrode active material particles as described above, the initial output of the energy storage device can be further increased.

The conductive agent is not particularly limited as long as it is a material having conductivity. Examples of such a conductive agent include carbon materials, metals, and conductive ceramics. Examples of the carbon materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and Ketjen Black. Examples of the graphene-based carbon include graphene, carbon nanotubes (CNTs), and fullerene. Examples of the shape of the conductive agent include a powdery form and a fibrous form. As the conductive agent, one of these materials may be used alone, or two or more of these materials may be mixed and used. Moreover, these materials may be compositely used. For example, a composite material of carbon black and a CNT may be used. Among them, carbon black is preferable and acetylene black is particularly preferable from the viewpoint of electron conductivity and coatability.

The content of the conductive agent in the positive electrode active material mixture is preferably 1% by mass or more and 10% by mass or less, and more preferably 3% by mass or more and 9% by mass or less. When the content of the conductive agent is within the above range, the energy density or the like of the energy storage device can be increased. The content of the conductive agent does not include the carbon material contained in the positive electrode active material particles (the carbon material coating the particles containing the lithium transition metal compound having a polyanion structure).

Examples of the binder include thermoplastic resins such as fluororesins (such as polytetrafluoroethylene (PTFE), polyvinylidene fluoride (PVDF)), polyethylene, polypropylene, polyacrylate, and polyimide; elastomers such as ethylene-propylene-diene rubber (EPDM), sulfonated EPDM, styrene-butadiene rubber (SBR), and fluoro rubber; and polysaccharide polymers.

The content of the binder in the positive electrode active material mixture is preferably 1% by mass or more and 10% by mass or less, and more preferably 3% by mass or more and 9% by mass or less. When the content of the binder is within the above range, the positive electrode active material can be stably held.

Examples of the thickener include polysaccharide polymers such as carboxymethyl cellulose (CMC) and methyl cellulose. When the thickener has a functional group that reacts with lithium or the like, this functional group may be deactivated in advance by methylation or the like. When a thickener is used, the content of the thickener in the positive electrode active material mixture can be, for example, 0.1% by mass or more and 8% by mass or less, and can also be 5% by mass or less or 1% by mass or less.

The filler is not particularly limited. Examples of the filler include polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; substances derived from mineral resources such as talc, montmorillonite, boehmite, zeolite, apatite, kaolin, mullite, spinel, olivine, sericite, bentonite, and mica; and synthetic substances thereof. When a filler is used, the content of the filler in the positive electrode active material mixture can be, for example, 0.1% by mass or more and 8% by mass or less, and can also be 5% by mass or less or 1% by mass or less.

The positive electrode active material mixture may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W, as constituents other than the positive electrode active material particles, the another positive electrode active material, the conductive agent, the binder, the thickener, and the filler.

### [Positive electrode for energy storage device]

A positive electrode for an energy storage device (hereinafter, also referred to as a "positive electrode") according to the embodiment of the present invention includes the positive electrode base material and the positive electrode active material mixture stacked on the positive electrode base material directly or via the intermediate layer. The positive electrode active material mixture stacked on the positive electrode base material forms the positive electrode active material layer.

The positive electrode base material has conductivity. The presence or absence of "conductivity" is determined using a volume resistivity of 10⁻² Ω·cm measured in accordance with JIS H 0505:1975 as a threshold value. As the material of the positive electrode base material, a metal such as aluminum, titanium, tantalum, or stainless steel, or an alloy thereof is used. Among them, aluminum or an aluminum alloy is preferable from the viewpoint of voltage resistance, high conductivity, and cost. Examples of the positive electrode base material include a foil, a vapor-deposited film, a mesh, and a porous material, and a foil is preferable from the viewpoint of cost. Therefore, the positive electrode base material is preferably an aluminum foil or an aluminum alloy foil. Examples of aluminum and aluminum alloys include A1085, A3003, and A1N30 specified in JIS H 4000:2014 or JIS H 4160:2006.

The average thickness of the positive electrode base material is preferably 3 µm or more and 50 µm or less, more preferably 5 µm or more and 40 µm or less, still more preferably 8 µm or more and 30 µm or less, and particularly preferably 10 µm or more and 25 µm or less. When the average thickness of the positive electrode base material is within the above range, the energy density per volume of the energy storage device can be increased while increasing the strength of the positive electrode base material.

The intermediate layer is a layer arranged between the positive electrode base material and the positive electrode active material layer (positive electrode active material mixture). The intermediate layer reduces the contact resistance between the positive electrode base material and the positive electrode active material layer by containing a conductive agent such as carbon particles. The intermediate layer is not particularly limited in terms of its configuration, and contains, for example, a binder and a conductive agent.

As the positive electrode active material mixture included in the positive electrode, the above-described positive electrode active material mixture according to the embodiment of the present invention can be used.

### [Method for manufacturing positive electrode]

A method for manufacturing a positive electrode includes, for example, preparing a positive electrode mixture paste containing a positive electrode active material mixture and a dispersion medium, applying the positive electrode mixture paste to at least one surface of a positive electrode base material directly or via an intermediate layer, drying the positive electrode mixture paste, and pressing the positive electrode active material mixture. As the dispersion medium used for the preparation of the positive electrode mixture paste, an organic solvent is suitably used, and examples of the organic solvent include N-methylpyrrolidone (NMP) and toluene. In addition, it is preferable that at least a part of the positive electrode active material particles in the positive electrode active material mixture, particularly the first active material particles, be arranged so as to be embedded in the positive electrode base material or the intermediate layer by the pressing.

### [Energy storage device]

An energy storage device according to the embodiment of the present invention includes: an electrode body having a positive electrode, a negative electrode, and a separator; an electrolyte; and a container for housing the electrode body and the electrolyte. The electrode body is usually a stacked type in which a plurality of positive electrodes and a plurality of negative electrodes are stacked with separators interposed therebetween, or a wound type in which positive electrodes and negative electrodes are wound in a state of being stacked with separator(s) interposed therebetween. The electrolyte exists in a state of being impregnated in the positive electrode, the negative electrode, and the separator. The electrolyte may be a nonaqueous electrolyte. As an example of the energy storage device, a nonaqueous electrolyte secondary battery whose electrolyte is a nonaqueous electrolyte (hereinafter, also simply referred to as a "secondary battery") will be described.

### <Positive electrode>

As the positive electrode included in the energy storage device, the above-described positive electrode according to the embodiment of the present invention can be used.

### <Negative electrode>

A negative electrode includes a negative electrode base material and a negative electrode active material layer arranged on the negative electrode base material directly or via an intermediate layer. The intermediate layer is not particularly limited in terms of its configuration, and can be selected from the configurations exemplified for the positive electrode, for example.

The negative electrode base material has conductivity. As the material of the negative electrode base material, a metal such as copper, nickel, stainless steel, nickel-plated steel, or aluminum, an alloy thereof, a carbon material, or the like is used. Among them, copper or a copper alloy is preferable. Examples of the negative electrode base material include a foil, a vapor-deposited film, a mesh, and a porous material, and a foil is preferable from the viewpoint of cost. Therefore, the negative electrode base material is preferably a copper foil or a copper alloy foil. Examples of the copper foil include a rolled copper foil and an electrolytic copper foil.

The average thickness of the negative electrode base material is preferably 2 µm or more and 35 µm or less, more preferably 3 µm or more and 30 µm or less, still more preferably 4 µm or more and 25 µm or less, and particularly preferably 5 µm or more and 20 µm or less. When the average thickness of the negative electrode base material is within the above range, the energy density per volume of the energy storage device can be increased while increasing the strength of the negative electrode base material.

The negative electrode active material layer contains a negative electrode active material. The negative electrode active material layer contains, as necessary, optional constituents such as a conductive agent, a binder, a thickener, and a filler. The optional constituents such as a conductive agent, a binder, a thickener, and a filler can be selected from the materials exemplified for the positive electrode.

The negative electrode active material layer may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W, as constituents other than the negative electrode active material, the conductive agent, the binder, the thickener, and the filler.

The negative electrode active material can be appropriately selected from known negative electrode active materials. As the negative electrode active material for a lithium-ion secondary battery, a material capable of occluding and releasing lithium ions is usually used. Examples of the negative electrode active material include metal Li; metals or semimetals such as Si and Sn; metal oxides or semimetal oxides such as Si oxides, Ti oxides, and Sn oxides; titanium-containing oxides such as Li₄Ti₅O₁₂, LiTiO₂, TiNb₂O₇; polyphosphate compounds; silicon carbide; and carbon materials such as graphite and non-graphitic carbon (graphitizable carbon or non-graphitizable carbon). Among these materials, graphite and non-graphitic carbon are preferable. In the negative electrode active material layer, one of these materials may be used alone, or two or more of these materials may be mixed and used.

The term "graphite" refers to a carbon material in which average interplanar spacing (d₀₀₂) of a plane (002) determined by an X-ray diffraction method before charge and discharge or in a discharged state is 0.33 nm or more and less than 0.34 nm. Examples of the graphite include natural graphite and artificial graphite. Artificial graphite is preferable from the viewpoint that a material having stable physical properties can be obtained.

The term "non-graphitic carbon" refers to a carbon material in which average interplanar spacing (d₀₀₂) of a plane (002) determined by an X-ray diffraction method before charge and discharge or in a discharged state is 0.34 nm or more and 0.42 nm or less. Examples of the non-graphitic carbon include non-graphitizable carbon and graphitizable carbon. Examples of the non-graphitic carbon include resin-derived materials, petroleum pitch or petroleum pitch-derived materials, petroleum coke or petroleum coke-derived materials, plant-derived materials, and alcohol-derived materials.

Here, the term "discharged state" means a state in which discharge is performed such that lithium ions, which can be occluded and released during charge and discharge, are sufficiently released from the carbon material serving as a negative electrode active material. For example, in a half-cell using a negative electrode containing a carbon material as a negative electrode active material as a working electrode and metal Li as a counter electrode, the "discharged state" is a state in which an open circuit voltage is 0.7 V or more.

The term "non-graphitizable carbon" refers to a carbon material in which the d₀₀₂ is 0.36 nm or more and 0.42 nm or less.

The term "graphitizable carbon" refers to a carbon material in which the d₀₀₂ is 0.34 nm or more and less than 0.36 nm.

The negative electrode active material is usually in the form of particles (powder). The average particle size of the negative electrode active material can be, for example, 1 nm or more and 100 µm or less. When the negative electrode active material is a carbon material, a titanium-containing oxide, or a polyphosphate compound, the average particle size thereof may be 1 µm or more and 100 µm or less. When the negative electrode active material is Si, Sn, an Si oxide, an Sn oxide, or the like, the average particle size thereof may be 1 nm or more and 1 µm or less. When the average particle size of the negative electrode active material is set to the above lower limit or more, the negative electrode active material is easily manufactured or handled. When the average particle size of the negative electrode active material is set to the above upper limit or less, the electron conductivity of the negative electrode active material layer is improved. In order to obtain a powder having a predetermined particle size, a pulverizer, a classifier, or the like, is used. When the negative electrode active material is a metal such as metal Li, the negative electrode active material layer may be in a foil form.

The content of the negative electrode active material in the negative electrode active material layer is preferably 60% by mass or more and 99% by mass or less, and more preferably 90% by mass or more and 98% by mass or less. When the content of the negative electrode active material is within the above range, both high energy density and manufacturability of the negative electrode active material layer can be achieved.

### <Separator>

The separator can be appropriately selected from known separators. As the separator, for example, a separator formed of only a base material layer, a separator in which a heat-resistant layer containing heat-resistant particles and a binder is formed on one surface or both surfaces of a base material layer, or the like, can be used. Examples of the shape of the base material layer of the separator include a woven fabric, a nonwoven fabric, and a porous resin film. Among these shapes, a porous resin film is preferable from the viewpoint of strength, and a nonwoven fabric is preferable from the viewpoint of liquid retainability of the nonaqueous electrolyte. As the material of the base material layer of the separator, for example, polyolefins such as polyethylene and polypropylene are preferable from the viewpoint of a shutdown function, and for example, polyimide, aramid, and the like, are preferable from the viewpoint of oxidative decomposition resistance. A composite material of these resins may be used as the base material layer of the separator.

Heat-resistant particles contained in the heat-resistant layer preferably have a mass loss of 5% or less when heated from room temperature to 500°C in an air atmosphere at 1 atm, and still more preferably have a mass loss of 5% or less when heated from room temperature to 800°C. Examples of the material having a mass loss of a predetermined amount or less include inorganic compounds. Examples of the inorganic compounds include oxides such as iron oxide, silicon oxide, aluminum oxide, titanium oxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; sparingly soluble ionic crystals such as calcium fluoride, barium fluoride, and barium titanate; covalent crystals such as silicon and diamond; substances derived from mineral resources such as talc, montmorillonite, boehmite, zeolite, apatite, kaolin, mullite, spinel, olivine, sericite, bentonite, and mica; and synthetic substances thereof. As the inorganic compound, each of these substances, whether in its individual form or as a composite, may be used alone, or two or more of these substances may be mixed and used. Among these inorganic compounds, silicon oxide, aluminum oxide, or aluminosilicate is preferable from the viewpoint of safety of the energy storage device.

The porosity of the separator is preferably 80% by volume or less from the viewpoint of strength, and is preferably 20% by volume or more from the viewpoint of discharge performance. Here, the term "porosity" refers to a value based on volume, and means a value measured by a mercury porosimeter.

As the separator, a polymer gel composed of a polymer and a nonaqueous electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has an effect of suppressing liquid leakage. As the separator, the above-described porous resin film or nonwoven fabric may be used in combination with the polymer gel.

### <Nonaqueous electrolyte>

The nonaqueous electrolyte can be appropriately selected from known nonaqueous electrolytes. As the nonaqueous electrolyte, a nonaqueous electrolytic solution may be used. The nonaqueous electrolytic solution contains a nonaqueous solvent and an electrolyte salt dissolved in this nonaqueous solvent.

The nonaqueous solvent can be appropriately selected from known nonaqueous solvents. Examples of the nonaqueous solvent include cyclic carbonates, linear carbonates, carboxylic acid esters, phosphoric acid esters, sulfonic acid esters, ethers, amides, and nitriles. As the nonaqueous solvent, those obtained by substituting a part of hydrogen atoms contained in these compounds with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenyl vinylene carbonate. Among them, EC is preferable.

Examples of the linear carbonates include diethyl carbonate (DEC), dimethyl carbonate (DMC), ethyl methyl carbonate (EMC), diphenyl carbonate, trifluoroethyl methyl carbonate, and bis(trifluoroethyl) carbonate. Among them, EMC is preferable.

As the nonaqueous solvent, a cyclic carbonate or a linear carbonate is preferably used, and a cyclic carbonate and a linear carbonate are more preferably used in combination. When the cyclic carbonate is used, dissociation of the electrolyte salt can be promoted to improve the ionic conductivity of the nonaqueous electrolytic solution. When the linear carbonate is used, the viscosity of the nonaqueous electrolytic solution can be suppressed to be low. When a cyclic carbonate and a linear carbonate are used in combination, the volume ratio of the cyclic carbonate to the linear carbonate (cyclic carbonate:linear carbonate) is preferably, for example, in the range of 5:95 to 50:50.

The electrolyte salt can be appropriately selected from known electrolyte salts. Examples of the electrolyte salt include a lithium salt, a sodium salt, a potassium salt, a magnesium salt, and an onium salt. Among them, a lithium salt is preferable.

Examples of the lithium salt include inorganic lithium salts such as LiPF₆, LiPO₂F₂, LiBF₄, LiClO₄, and LiN(SO₂F)₂; lithium oxalate salts such as lithium bis(oxalato)borate (LiBOB), lithium difluoro(oxalato)borate (LiFOB), and lithium bis(oxalate)difluorophosphate (LiFOP); and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among them, inorganic lithium salts are preferable, and LiPF₆ is more preferable.

The content of the electrolyte salt in the nonaqueous electrolytic solution is preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less, at 20°C and at 1 atm. When the content of the electrolyte salt is within the above range, the ionic conductivity of the nonaqueous electrolytic solution can be increased.

The nonaqueous electrolytic solution may contain an additive in addition to the nonaqueous solvent and the electrolyte salt. Examples of the additive include halogenated carbonate esters such as fluoroethylene carbonate (FEC) and difluoroethylene carbonate (DFEC); oxalate salts such as lithium bis(oxalato)borate (LiBOB), lithium difluoro(oxalato)borate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partially halogenated derivatives of the above aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methyl vinylene carbonate, ethyl vinylene carbonate, succinic anhydride, glutaric anhydride, maleic anhydride, citraconic anhydride, glutaconic anhydride, itaconic anhydride, and cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tris(trimethylsilyl)borate, tris(trimethylsilyl)phosphate, tetrakis(trimethylsilyl)titanate, lithium monofluorophosphate, and lithium difluorophosphate. One of these additives may be used alone, or two or more of these additives may be mixed and used.

The content of the additive contained in the nonaqueous electrolytic solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the nonaqueous electrolytic solution. When the content of the additive is within the above range, the capacity retention performance or cycle performance after high-temperature storage can be improved, and the safety can be further improved.

As the nonaqueous electrolyte, a solid electrolyte may be used, or a nonaqueous electrolytic solution and a solid electrolyte may be used in combination.

The solid electrolyte can be selected from any materials that have ionic conductivity and are solid at ordinary temperature (for example, 15°C to 25°C), such as lithium, sodium, and calcium. Examples of the solid electrolyte include sulfide solid electrolytes, oxide solid electrolytes, nitride solid electrolytes, and polymer solid electrolytes.

In the case of a lithium-ion secondary battery, examples of the sulfide solid electrolytes include Li₂S-P₂S₅, LiI-Li₂S-P₂S₅, and Li₁₀Ge-P₂S₁₂.

The shape of the energy storage device of the present embodiment is not particularly limited, and examples thereof include a cylindrical battery, a prismatic battery, a flat-type battery, a coin battery, and a button battery.

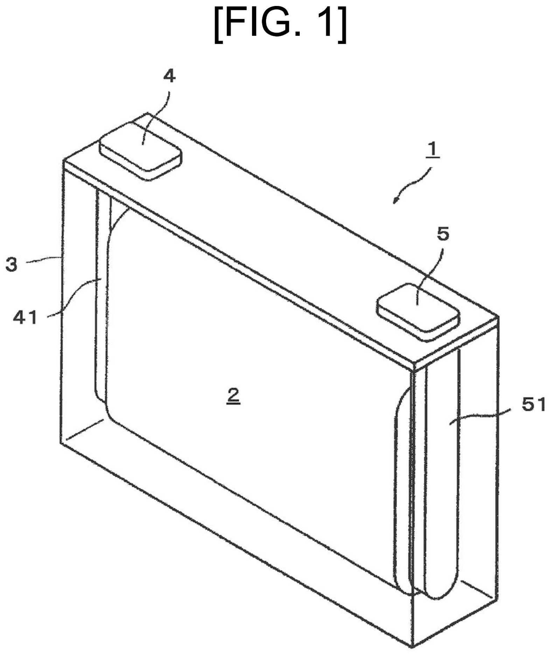

FIG. 1 illustrates an energy storage device 1 as an example of a prismatic battery. FIG. 1 is a perspective view of the inside of a container. An electrode body 2 having a positive electrode and a negative electrode wound with a separator interposed therebetween is housed in a prismatic container 3. The positive electrode is electrically connected to a positive electrode terminal 4 via a positive electrode lead 41. The negative electrode is electrically connected to a negative electrode terminal 5 via a negative electrode lead 51.

### [Energy storage apparatus]

The energy storage device of the present embodiment can be mounted as an energy storage unit (battery module) configured by assembling a plurality of energy storage devices in power sources for automobiles such as electric vehicles (EVs), hybrid electric vehicles (HEVs), or plug-in hybrid electric vehicles (PHEVs), power sources for electronic apparatuses such as personal computers or communication terminals, power sources for power storage, or the like. In this case, the technique according to the present invention may be applied to at least one energy storage device included in the energy storage unit.

An energy storage apparatus according to the embodiment of the present invention includes two or more energy storage devices and one or more of the energy storage devices according to the above-described embodiment of the present invention (hereinafter, referred to as a "second embodiment"). The technique according to the embodiment of the present invention may be applied to at least one energy storage device included in the energy storage apparatus according to the second embodiment. The energy storage apparatus may include one energy storage device according to the above-described embodiment of the present invention and one or more energy storage devices not according to the above-described embodiment of the present invention, or may include two or more energy storage devices according to the above-described embodiment of the present invention.

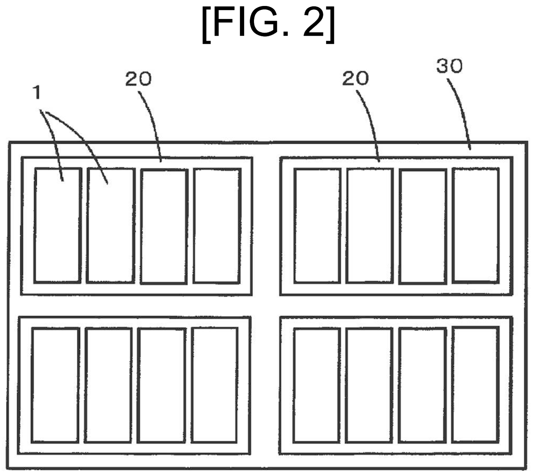

FIG. 2 illustrates an example of an energy storage apparatus 30 according to the second embodiment in which energy storage units 20 in each of which two or more electrically connected energy storage devices 1 are assembled are further assembled. The energy storage apparatus 30 may include a bus bar (not illustrated) that electrically connects two or more energy storage devices 1, a bus bar (not illustrated) that electrically connects two or more energy storage units 20, and the like. The energy storage unit 20 or the energy storage apparatus 30 may include a state monitoring device (not illustrated) that monitors a state of one or more energy storage devices.

### [Method for manufacturing energy storage device]

A method for manufacturing the energy storage device of the present embodiment can be appropriately selected from known methods. The method for manufacturing includes, for example, preparing an electrode body, preparing an electrolyte, and housing the electrode body and the electrolyte in a container. Preparing the electrode body includes preparing a positive electrode and a negative electrode, and forming the electrode body by stacking or winding the positive electrode and the negative electrode with a separator interposed therebetween.

Housing the electrolyte in the container can be appropriately selected from known methods. For example, when a nonaqueous electrolytic solution is used as the electrolyte, the nonaqueous electrolytic solution may be injected through an inlet formed in the container, and then the inlet may be sealed.

### [Other embodiments]

The positive electrode active material particles, the positive electrode active material mixture, the positive electrode for an energy storage device, the energy storage device, and the energy storage apparatus of the present invention are not limited to the above-described embodiments, and various modifications may be made without departing from the scope of the present invention. A configuration of an other embodiment can be added to a configuration of an embodiment, or a part of a configuration of an embodiment can be replaced with a configuration of an other embodiment or with a known technique. A part of a configuration of an embodiment can be omitted. A known technique can be added to a configuration of an embodiment.

In the above-described embodiments, the case where the energy storage device is used as a chargeable and dischargeable nonaqueous electrolyte secondary battery (for example, a lithium-ion secondary battery) has been described. However, the energy storage device may be of any type, shape, size, and capacity. The present invention can also be applied to various secondary batteries and capacitors such as electric double layer capacitors or lithium ion capacitors. The energy storage device of the present invention may be an energy storage device other than the nonaqueous electrolyte energy storage device.

In the above-described embodiments, the electrode body in which the positive electrode and the negative electrode are stacked with the separator interposed therebetween has been described. However, the electrode body may not include a separator. For example, in a state where a layer not having conductivity is formed on the active material layer of the positive electrode or the negative electrode, the positive electrode and the negative electrode may be in direct contact with the layer.

### Embodiment examples

Hereinafter, the present invention will be more specifically described with reference to embodiment examples. The present invention is not limited to the following embodiment examples.

### [Embodiment example 1]

### (Preparation of positive electrode active material particles)

Active material particles A obtained by coating secondary particles of lithium iron phosphate with a carbon material were obtained by the following procedure.

While 1 mol/dm³ of an FeSO₄ aqueous solution was added dropwise at a constant rate to a 2 dm³ reaction vessel containing 750 cm³ of ion-exchanged water, 4 mol/dm³ of an NaOH aqueous solution, 0.75 mol/dm³ of an NH₃ aqueous solution, and 0.5 mol/dm³ of an NH₂NH₂ aqueous solution were added dropwise so as to maintain a pH of a reaction liquid at a constant value of 10.5±0.1, thereby preparing an Fe(OH)₂ precursor. The temperature of the reaction vessel was set to 50°C±2°C. Next, the prepared Fe(OH)₂ precursor was taken out from the reaction vessel, and solid-phase mixed with 116 parts by mass of LiH₂PO₄ and 10 parts by mass of sucrose powder with respect to 100 parts by mass of the Fe(OH)₂ precursor. Then, the obtained mixture was fired at a firing temperature of 650°C under a nitrogen atmosphere, thereby obtaining the active material particles A obtained by coating particles of LiFePO₄ as a lithium transition metal compound having a polyanion structure with a carbon material.

The content of the carbon material in the obtained active material particles A was 1.0% by mass. The average particle size of the active material particles A measured by the above-described method was 10 µm. The destructive test force of the active material particles A measured by the above-described method was 5.0 mN.

Active material particles different from the active material particles A were prepared in the same manner as the active material particles A except that the pH of the reaction liquid when manufacturing the Fe(OH)₂ precursor was adjusted so as to be maintained at 12.0±0.1. The pH of the reaction liquid was adjusted by changing the amount dropped of each aqueous solution to be added dropwise. The adjustment method of the pH of the reaction liquid is the same in the following embodiment examples and comparative examples. Furthermore, the active material particles were pulverized by a pulverizer to obtain active material particles B having an average particle size of 1 µm or more and 2 µm or less. The destructive test force of the active material particles B measured by the above-described method was 3.2 mN.

Then, the active material particles A and the active material particles B were mixed at a ratio of 1:1 on a mass basis to obtain positive electrode active material particles. For the positive electrode active material particles, the destructive test force of each of the active material particles A and the active material particles B was measured by the measurement method of the destructive test force using the "positive electrode active material particles in a state where the first active material particles and the second active material particles are mixed" described above. The destructive test forces of the active material particles A and the active material particles B obtained as a result of the measurement coincided with the respective destructive test forces measured before the positive electrode active material particles were obtained (before the active material particles A and the active material particles B were mixed).

### (Preparation of positive electrode)

A positive electrode mixture paste was prepared by using the obtained positive electrode active material particles, acetylene black (AB) as a conductive agent, polyvinylidene fluoride (PVDF) as a binder, and N-methylpyrrolidone (NMP) as a dispersion medium. The mass ratio of the positive electrode active material particles, AB, and PVDF was 90:5:5 in terms of solid content. The positive electrode mixture paste was applied to an aluminum foil as a positive electrode base material, dried, and roll-pressed with a pressure of 20 kN to form a positive electrode active material layer (positive electrode active material mixture), thereby obtaining a positive electrode of Embodiment example 1. At this time, an "electrode density" obtained by dividing the total mass of the active material particles A and the active material particles B by a volume of the positive electrode active material layer was 2.3 mg/cm³.

### (Preparation of negative electrode)

A negative electrode mixture paste was prepared by mixing graphite as a negative electrode active material, styrene-butadiene rubber (SBR) as a binder, carboxymethyl cellulose (CMC) as a thickener, and water as a dispersion medium. The mass ratio of graphite, SBR, and CMC was 96:3.3:0.7 in terms of solid content. The negative electrode mixture paste was applied to a copper foil as a negative electrode base material, dried, and roll-pressed to form a negative electrode active material layer, thereby obtaining a negative electrode.

### (Nonaqueous electrolyte)

LiPF₆ was dissolved at a concentration of 1.1 mol/dm³ in a mixed solvent of ethylene carbonate (EC), diethyl carbonate (DEC), and ethyl methyl carbonate (EMC) at a volume ratio of 30:35:35, thereby obtaining a nonaqueous electrolyte.

### (Separator)

A polyethylene microporous film was used as a separator.

### (Assembly of energy storage device)

The positive electrode, the negative electrode, and the separator were stacked to prepare an electrode body. The obtained electrode body was housed in a container, then, the nonaqueous electrolyte was injected into the container, and then the container was sealed to obtain an energy storage device of Embodiment example 1.

### [Embodiment examples 2 to 4, Comparative examples 1 to 3]

Positive electrode active material particles, positive electrodes, and energy storage devices of Embodiment examples 2 to 4 and Comparative examples 1 to 3 were obtained in the same manner as in Embodiment example 1 except that, in the preparation of the active material particles A, the reaction liquid when manufacturing the Fe(OH)₂ precursor was adjusted so as to maintain the pH value (±0.1) shown in Table 1.

The average particle size and the destructive test force of each of the active material particles A and the active material particles B of the obtained positive electrode active material particles, and the electrode density of each positive electrode are shown in Table 1.

### [Embodiment examples 5 to 7, Comparative examples 4 to 7]

Positive electrode active material particles, positive electrodes, and energy storage devices of Embodiment examples 5 to 7 and Comparative examples 4 to 7 were obtained in the same manner as in Embodiment example 1 except that, in the preparation of the active material particles A and B, the reaction liquid when manufacturing the Fe(OH)₂ precursor was adjusted so as to maintain the pH value (±0.1) shown in Table 1.

The average particle size and the destructive test force of each of the active material particles A and the active material particles B of the obtained positive electrode active material particles, and the electrode density of each positive electrode are shown in Table 1.

### [Evaluations]

### (Initial charge and discharge)

Each of the obtained energy storage devices was subjected to initial charge and discharge at 25°C in the following manner. Constant current, constant voltage charge was performed at a charge current of 0.2 C and a charge cutoff voltage of 3.5 V. The charge was terminated until the charge current reached 0.01 C. This was followed by a 10 minute rest period. Thereafter, constant current discharge was performed at a discharge current of 0.2 C and a discharge cutoff voltage of 2.0 V.

### (Initial capacity confirmation test)

Next, each of the energy storage devices was subjected to an initial capacity confirmation test at 25°C in the following manner. Constant current, constant voltage charge was performed at a charge current of 1.0 C and a charge cutoff voltage of 3.5 V. The charge was terminated until the charge current reached 0.01 C. This was followed by a 10 minute rest period. Thereafter, constant current discharge was performed at a discharge current of 1.0 C and a discharge cutoff voltage of 2.0 V. The discharge capacity at this time was defined as an "initial discharge capacity". The fully charged state based on the initial discharge capacity was defined as SOC (State Of Charge) 100%.

### (Initial output confirmation test)

For each of the energy storage devices after the initial capacity confirmation test, constant current charge was performed at a charge current of 0.2 C in a constant temperature bath at 25°C until the SOC reached 50%. The charge was terminated until total charge time reached 2.5 hours. Next, discharge was performed for 60 seconds at discharge currents of 0.2 C, 0.5 C, and 1.0 C. After each discharge was terminated, a 10 minute rest period was provided, and then supplemental charge was performed at a charge current of 0.2 C until the SOC reached 50%. From a graph of current-voltage characteristics obtained by plotting the voltage 10 seconds after the start of each discharge on the vertical axis and the discharge current on the horizontal axis, the output [W] at 10 seconds was obtained by the IV method with the lower limit voltage set to 2.0 V, and was defined as a "25°C initial output". The results are shown in Table 1.

For each of the energy storage devices, a product of the electrode density and the 25°C initial output was obtained as an "output density". The results are shown in Table 1.

**[Table 1]**

| | ACTIVE MATERIAL PARTICLES A | | | ACTIVE MATERIAL PARTICLES B | | | ELECTRODE DENSITY [mg/cm³] | 25°C INITIAL OUTPUT [W] | OUTPUT DENSITY [W mg/cm³] |
|---|---|---|---|---|---|---|---|---|---|
| | pH OF REACTION LIQUID | AVERAGE PARTICLE SIZE [µm] | DESTRUCTIVE TEST FORCE [mN] | pH OF REACTION LIQUID | AVERAGE PARTICLE SIZE [µm] | DESTRUCTIVE TEST FORCE [mN] | | | |
| COMPARATIVE EXAMPLE 1 | 12.0 | 10 | 3.2 | 12.0 | 1-2 | 3.2 | 2.3 | 8 | 18 |
| COMPARATIVE EXAMPLE 2 | 11.5 | 10 | 3.5 | 12.0 | 1-2 | 3.2 | 2.3 | 9 | 21 |
| COMPARATIVE EXAMPLE 3 | 11.0 | 10 | 4.2 | 12.0 | 1-2 | 3.2 | 2.3 | 10 | 23 |
| EMBODIMENT EXAMPLE 1 | 10.5 | 10 | 5.0 | 12.0 | 1-2 | 3.2 | 2.3 | 21 | 48 |
| EMBODIMENT EXAMPLE 2 | 10.0 | 10 | 8.6 | 12.0 | 1-2 | 3.2 | 2.3 | 21 | 48 |
| EMBODIMENT EXAMPLE 3 | 9.5 | 10 | 11.5 | 12.0 | 1-2 | 3.2 | 2.3 | 21 | 48 |
| EMBODIMENT EXAMPLE 4 | 9.0 | 10 | 15.2 | 12.0 | 1-2 | 3.2 | 2.3 | 21 | 48 |
| EMBODIMENT EXAMPLE 5 | 12.0 | 10 | 3.2 | 9.5 | 1-2 | 11.5 | 2.3 | 20 | 46 |
| EMBODIMENT EXAMPLE 6 | 11.5 | 10 | 3.5 | 9.5 | 1-2 | 11.5 | 2.3 | 20 | 46 |
| EMBODIMENT EXAMPLE 7 | 11.0 | 10 | 4.2 | 9.5 | 1-2 | 11.5 | 2.3 | 20 | 46 |
| COMPARATIVE EXAMPLE 4 | 10.5 | 10 | 5.0 | 9.5 | 1-2 | 11.5 | 1.7 | 21 | 36 |
| COMPARATIVE EXAMPLE 5 | 10.0 | 10 | 8.6 | 9.5 | 1-2 | 11.5 | 1.7 | 21 | 36 |
| COMPARATIVE EXAMPLE 6 | 9.5 | 10 | 11.5 | 9.5 | 1-2 | 11.5 | 1.7 | 21 | 36 |
| COMPARATIVE EXAMPLE 7 | 9.0 | 10 | 15.2 | 9.5 | 1-2 | 11.5 | 1.7 | 21 | 36 |

As shown in Table 1, in Embodiment examples 1 to 7 and Comparative examples 4 to 7 in which at least one of the destructive test forces of the active material particles A or B is 5.0 mN or more, the initial outputs (25°C initial outputs) were significantly improved as compared with Comparative examples 1 to 3 in which both of the destructive test forces of the active material particles A and B are less than 5.0 mN. In addition, among Embodiment examples 1 to 7 and Comparative examples 4 to 7, Embodiment examples 1 to 7 in which the destructive test force of one of the active material particles is 4.2 mN or less were able to increase the electrode densities as compared with Comparative examples 4 to 7 in which the destructive test forces of both the active material particles A and B exceed 4.2 mN. From the above, it is considered that both the initial output and the electrode density of the energy storage device can be increased by combining the active material particles having a high hardness with a destructive test force of 5.0 mN or more and the active material particles having a low hardness with a destructive test force of 4.2 mN or less.

### INDUSTRIAL APPLICABILITY

The present invention can be applied to energy storage devices used as power sources of electronic apparatuses such as personal computers or communication terminals, automobiles, or the like.

### DESCRIPTION OF REFERENCE NUMERALS

1 Energy storage device
2 Electrode body
3 Container
4 Positive electrode terminal
41 Positive electrode lead
5 Negative electrode terminal
51 Negative electrode lead
20 Energy storage unit
30 Energy storage apparatus

## Claims

1. Positive electrode active material particles comprising:
first active material particles and second active material particles, wherein
the first active material particles and the second active material particles each contain a lithium transition metal compound having a polyanion structure, and
a destructive test force of the first active material particles is 5.0 mN or more, and a destructive test force of the second active material particles is 4.2 mN or less.

2. The positive electrode active material particles according to claim 1, wherein an average particle size of the first active material particles is larger than an average particle size of the second active material particles.

3. The positive electrode active material particles according to claim 1 or 2, wherein
an average particle size of the first active material particles is different from an average particle size of the second active material particles, and
a ratio d2/d1 of a value d2 of a larger one of the average particle size of the first active material particles and the average particle size of the second active material particles to a value d1 of a smaller one of the average particle size of the first active material particles and the average particle size of the second active material particles is 3.0 or more.

4. The positive electrode active material particles according to claim 1 or 2, wherein
an average particle size of the first active material particles is different from an average particle size of the second active material particles, and
a ratio m2/m1 of a content m2 of one of the first active material particles and the second active material particles having a larger average particle size to a content m1 of an other of the first active material particles and the second active material particles having a smaller average particle size is, on a mass basis, 1.0 or more and 2.4 or less.

5. A positive electrode active material mixture containing the positive electrode active material particles according to claim 1 or 2.

6. A positive electrode for an energy storage device, comprising a positive electrode base material and the positive electrode active material mixture according to claim 5 stacked on the positive electrode base material.

7. An energy storage device comprising the positive electrode for an energy storage device according to claim 6.

8. An energy storage apparatus comprising two or more energy storage devices and one or more of the energy storage devices according to claim 7.
